(19) **Europäisches Patentamt**

**European Patent Office**

**Office européen des brevets**

(11) **EP 1 098 540 A1**

(12) **EUROPEAN PATENT APPLICATION**
published in accordance with Art. 158(3) EPC

(43) Date of publication:
09.05.2001 Bulletin 2001/19

(51) Int. Cl.⁷: **H04Q 7/22**, H04Q 7/28, H04Q 7/36

(21) Application number: **98932532.9**

(22) Date of filing: **15.07.1998**

(86) International application number:
**PCT/JP98/03178**

(87) International publication number:
**WO 00/04733 (27.01.2000 Gazette 2000/04)**

(84) Designated Contracting States:
**DE FR GB**

(71) Applicant: **Hitachi, Ltd.**
**Chiyoda-ku, Tokyo 101-8010 (JP)**

(72) Inventors:
• **KUSAKI, Tsutomu**
**Yokohama-shi, Kanagawa 244-8567 (JP)**

• **HIRAYAMA, Koji**
**Yokohama-shi, Kanagawa 244-8567 (JP)**
• **SHIRAI, Keisuke**
**Yokohama-shi, Kanagawa 244-8567 (JP)**

(74) Representative:
**Strehl Schübel-Hopf & Partner**
**Maximilianstrasse 54**
**80538 München (DE)**

(54) **METHOD OF SWITCHING BUSY LINE IN MOBILE COMMUNICATION NETWORK**

(57)    A method of switching lines during data communication in a mobile communication system without lowering the data transfer rate and increasing traffic. In a mobile communication network comprising a data MS 100, a BTS 200, a BSC 300, and a data communication network 1000, when data transfer lines are switched from a before-handoff data transmission-reception path 500 to a before-handoff data transmission-reception path 500A in accordance with movement of the data MS 100, switching of busy lines is performed such that the BSC 300 detects a timing at which data is not transmitted and received, and switches the lines at that timing.

FIG.1

## Description

Technical Field

The present invention relates to a method of switching lines, a mobile station (MS), and a base station controller (BSC) in a mobile communication network that can perform data communication.

Background Art

Conventionally, in a mobile communication network comprising mobile stations, base transceiver systems (BTS) (including base station controllers), mobile switching centers (MSC), and their peripheral equipment, processing called "handoff" is performed to continue a telephone conversation without causing disconnection of the communication by switching lines in the upper level than the base transceiver systems according to movement of a mobile station. This handoff is classified into "hard handoff" and "soft handoff" based on difference in line connecting and switching procedures.

In "hard handoff", when a request for a start of handoff occurs in the course of communication, the communication is suspended for a while, and setting of line connection of the mobile station is switched from setting for a source base transceiver system (a base transceiver system that forms a radio area in which the mobile station is located before the movement of the mobile station) to setting for a target base transceiver system (a base transceiver system that forms a radio area in which the mobile station is located after the movement of the mobile station), and, at the same time, the target base transceiver system is activated. Then, in a node (for example, a base station controller) that accommodates both lines from the source and target base transceiver systems, processing (line switching) is carried out such that the line connected to a host network for the source base transceiver system is reconnected for the target base transceiver system. Then, synchronism is established between the mobile station and the target base transceiver system, and the suspended communication is resumed (conventional technique 1). The conventional technique 1 is described in "TIA/EIA/IS-634 MSC-BSC Interface for Public 800 MHz" and in "Association of Radio Industries and Businesses: RCR STD-27F Digital Automobile Telephone System".

In "soft handoff", when a request for a start of handoff (Soft Handoff Addition) occurs in the course of communication, a target base transceiver system is activated, and a mobile station establishes setting for realizing connection with that base transceiver system, with a plurality of lines being established at the same time between the target base transceiver system and the mobile station and between the source base transceiver system and the mobile station, without suspending the busy line.

Then, in a node (for example, a base station controller) that accomodates both of the above-mentioned plurality of lines, the same communication frames (or packets) received from a plurality of base transceiver systems are selectively synthesized to convert them to one communication frame (or packet). This one communication frame obtained by the conversion is sent to a data communication network.

On the other hand, a communication frame received by the base station controller and destined for the mobile station from the data communication network is duplicated by the number of the above-mentioned plurality of lines, and transmitted to the above-mentioned plurality of lines. By the above-described processing, the mobile station and its host network are connected through a plurality of lines at the same time. This state is called a state of soft handoff.

On the other hand, when, in the state of soft handoff, release of one or more of the plurality of lines is requested (Soft Handoff Drop), a designated base transceiver system stops transmission and reception, and the mobile station stops communication with the base transceiver system in question, and continues communication utilizing the remaining lines.

Further, also with respect to upper lines from the base transceiver system in question, an unnecessary part of the lines is released when the base transceiver system stops transmission and reception. Thus, soft handoff is a method that can effectuate continuous communication without suspension (or a short break) of the communication, by repeatedly carrying out the above-described serial processing (conventional technique 2). The conventional technique 2 is described in "TIA/EIA/IS-634 MSC-BSC Interface for Public 800 MHz".

Differently from voice communication, data communication requires that transmit and reception data is transferred without error between the end point on the transmit side and the end point on the reception side of the data (complete assurance). To this end, is generally employed a signaling system (for example, TCP) for performing confirmation of data delivery and control of retransmission between both end points.

However, the above-mentioned signaling system brings overhead information added to the intrinsic data part. Further, when there is a part of poor line quality between both end points, the data is retransmitted according to the signaling system in question. These incur tightening of traffic of the whole communication network and lowering of the data transfer rate between both end points.

When the above-mentioned data communication is realized in a mobile communication network, a wireless interval has poorer transmission quality than a wired interval, and has the narrowest bandwidth. Thus, the actual data transfer rate is defined by the data transfer rate in the wireless interval. Further, in a wireless interval of a mobile communication network, handoff occurs as a mobile station moves, as described by the above-mentioned conventional techniques.

When hard handoff described in the above-mentioned conventional technique 1 is started in the course of data communication, the line is temporarily disconnected while the line switching processing is performed in each apparatus. As a result, data missing occurs between both end points. Thus, after the end of the hand off, retransmission control is performed to retransmit the missing data, before reestablishing the data transmission and reception. Namely, when hard handoff is started, thereafter retransmission control of the data is carried out. And, as a result, the actual data transfer rate between both end points is largely lowered.

On the other hand, even when there arises soft handoff described in the above-mentioned conventional technique 2 in the course of data communication in the same network, data missing does not occur since temporary disconnection of the line does not happen as in the case of hard handoff. However, at the time of handoff, a plurality of handoff lines are established. Accordingly, one active session of data communication uses a plurality of lines, although a limited number of lines are set in advance for the network as a whole. Thus, the number of data communications that can be established at the same time is decreased. Further, in the case of packet communication, bandwidth per each data communication is decreased, and accordingly, the actual data transfer rate is lowered.

An object of the present invention is to provide a line switching method, a mobile station, and a base station controller that can perform handoff in the course of data communication in a mobile communication network without lowering the data transfer rate.

Another object of the present invention is to provide a line switching method, a mobile station, and a base station controller that can perform handoff in the course of data communication in a mobile communication network without lowering the number of data communications capable of establishing at the same time.

Disclosure of the Invention

According to the present invention, for attaining the above objects, in a mobile communication system comprising a data terminal (data MS), base transceiver systems (BTS), a base station controller (BSC), a data communication network, and lines for connecting the above-mentioned elements with each other, the BSC, during activation of data communication, temporarily accumulates frames received from the connected BTS and data communication network into a frame buffer, judges if information is contained in each of a plurality of frames accumulated in the frame buffer, and stores the results of judgment into a frame information control table formed in a memory inside the BSC. On the other hand, during activation of data communication, the data MS stores frames received from connected BTSs in a frame memory at any time. When the data MS receives a new frame, contents of the oldest frame is deleted to store contents of the new frame.

When handoff (hereinafter, may be simply referred to as HO) is started, the BSC extracts a timing in which frames without containing information continue longer than the time required for the handoff, from the above-mentioned frame information control table. The extracted timing becomes the timing at which the handoff is performed. A CPU has a means for instructing a switch to perform line switching from a source line to a target line at that timing. On the other hand, a signal processing part makes handoff start timing information be included in a signal directed to the MS, and that signal is transmitted to the MS through the BTS. The data MS, which receives that signal by a signal processing part, has a means for detecting the handoff start timing contained in that signal, a means for detecting the first of the frames that are stored in the frame memory and to be sent at that timing, and a means for starting retransmission from that frame at the same time with that timing.

Brief Description of Drawings

Fig. 1 is a block diagram showing a mobile communication network to which the present invention is applied:
Fig. 2 is a block diagram showing the inner structure of a BSC;
Fig. 3 is a diagram showing a state of accumulation of frames in a frame buffer adapted for a line on the side of NW;
Fig. 4 is a diagram showing a state of accumulation of frames in a frame buffer adapted for a line on the side of BTS;
Fig. 5 is a block diagram showing the inner structure of a data MS;
Fig. 6 is a diagram showing a state of storage and accumulation of frames in an MS frame memory;
Fig. 7 is a diagram showing a signal sequence at the time of handoff-between MS - BTS - BSC;
Fig. 8 is a diagram showing relation between handoff timing and information vacancy timing; and
Fig. 9 shows a configuration of a frame information control table inside the BSC.

Best Mode for Carrying Out the Invention

Now, embodiments of the present invention will be described referring to the figures.

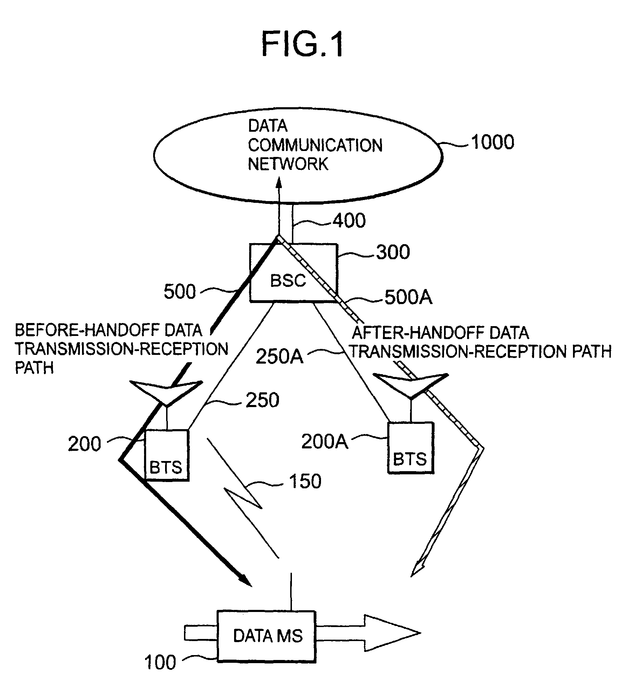

Fig. 1 shows an outlined configuration of a communication network system to which the present invention is applied.
This network comprises a data MS (mobile station) 100, a BTS (base transceiver system) 200, a BSC (base station controller) 300, and a data communication network 1000. Further, the above-mentioned elements are connected with each other through a radio line 150, a BTS - BSC line 250, or a BSC - data communication network line 400. When the data MS 100 is in the course of communication with another data communication apparatus through the data communication network 1000, data is transferred through the data MS 100, the radio line 150, the BTS 200, the BTS - BSC line 250, the BSC 300, the BSC - data communication network line 400, and the data communication network 1000. Here, the direction in the case that the data is transferred from the data MS 100 toward the data communication network 1000 is called the uplink, and the direction in the case that the data is transferred from the data communication network 1000 toward the data MS 100 is called the downlink.

When the MS 100 moves while connected with the BST 200 through the radio line 150 and reaches an area in which a radio line with the BTS 200A can be established, then the BSC 300 switches lines from the BTS - BSC line 250 to BTS - BSC line 250A at a timing when there is no data to be sent or received. By that operation, the communication is continued using a new channel (after-handoff data transmission and reception path 500A) that passes through the data MS 100, the radio line 150A, the BTS 200A, the BTS - BSC line 250A, the BSC 300, the BSC - data communication network line 400, and the data communication network 1000. On the other hand, the channel (before-handoff data transmission and reception path 500) through which the communication has been performed is disconnected and released at the part of the radio line 150 and the BTS - BSC line 250. This operational processing is called "handoff", and, by repeating this operation, data missing does not occur even if the data MS 100 moves in the course of data communication, high throughput is ensured, and the communication is continued.

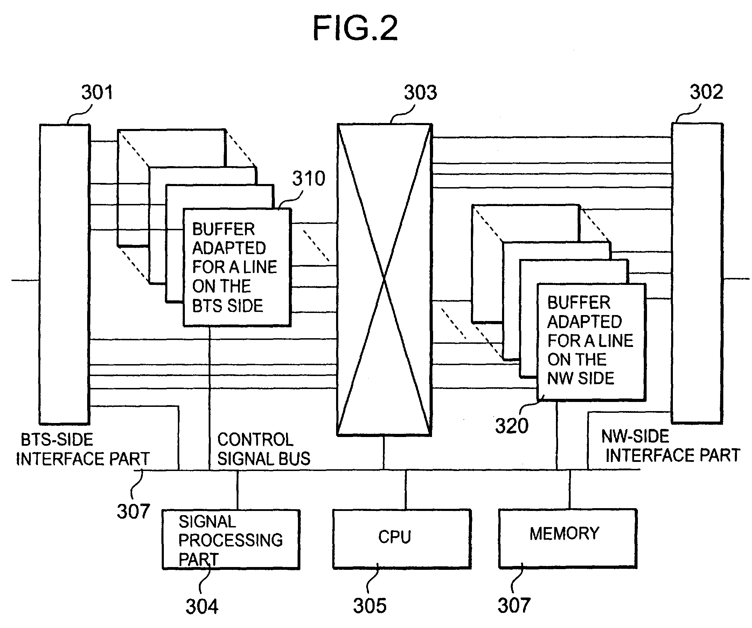

Fig. 2 shows an outline of the inner structure of the BSC 300.

The BSC 300 comprises: a BTS-side interface part 301 that accommodates the BTS - BSC line 250; an NW-side interface part 302 that accommodates the BSC - data communication network line 400; a switch 303 for performing switching between the above-mentioned lines 250 and 400; a signal processing part 304 for analyzing and generating control signals on both BTS- and NW-side interfaces; a CPU 305 for performing control processing for each element inside the BSC; a memory 306 for storing control information and a program for the above-mentioned control processing; a control signal bus 307 used for sending and receiving the above-mentioned control signals between the elements; a buffer 310 adapted for a BTS-side line, which temporarily accumulates data frames received through the BTS - BSC line 250; and a buffer 320 adapted for an NW-side line, which temporarily accumulates data frames received through the BSC - data communication network line 400.

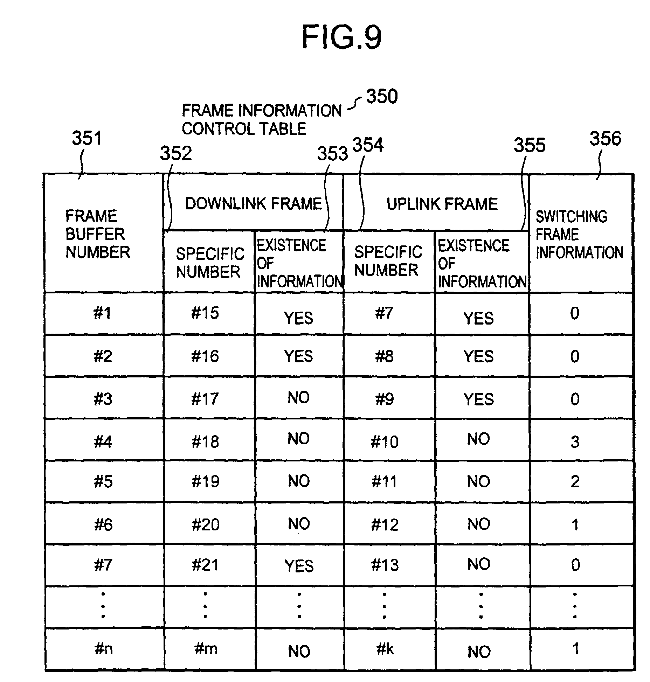

A data frame received by the BTS-side interface part 301 through the BTS - BSC line 250 is sent to the buffer 310 adapted for the BTS-side line prepared correspondingly to each line, accumulated temporarily in that buffer, and sent to the switch 303 in FIFO order. At this time, the buffer 310 adapted for the BTS-side line accumulates a given number of frames, and judges if data is contained in each of the above-mentioned frames. The judgment result is sent to a frame information control table 350 (see Fig. 9) in the memory 306 through the control signal bus 307, and stored into the above-mentioned table. On the other hand, similarly to the BTS side, also a data frame received by the NW-side interface part 302 through the BSC - data communication network line 400 is temporarily accumulated in the buffer 320 adapted for the NW-side line, and, in that buffer 320, it is judged if data is contained or not. The judgment result is stored into the frame information control table 350. The information in the frame information control table 350 is updated every time a frame is received by the buffer 310 or 320.

In the BSC 300 carrying out the above-described operation, when a handoff request is made by the data MS 100, the BTS 200, the data network 1000, or the BSC 300 itself, that handoff request is received by the signal processing part 304 for a while. When the handoff request is recognized, a handoff program stored in the memory 306 is activated on the CPU to start the handoff processing. First, the handoff processing searches a part of the frame information control table 350 in which, out of the received frames on the BTS side and on the NW side, frames without containing data exist consecutively for more than a period of time required for the handoff processing. When such a part is detected, a timing from a start to an end of sending the frames in that part from the buffers 310 and 320 is calculated. And, a signal indicating line switching within that timing is sent to the switch 303 through the control signal bus 307. Further, it is informed to the MS by means of the control signal processing part 304 and through the BTS that line switching, i.e. handoff, is to be carried out in that timing. Then, when the switch 303 switches the lines in that timing, the handoff processing is finished.

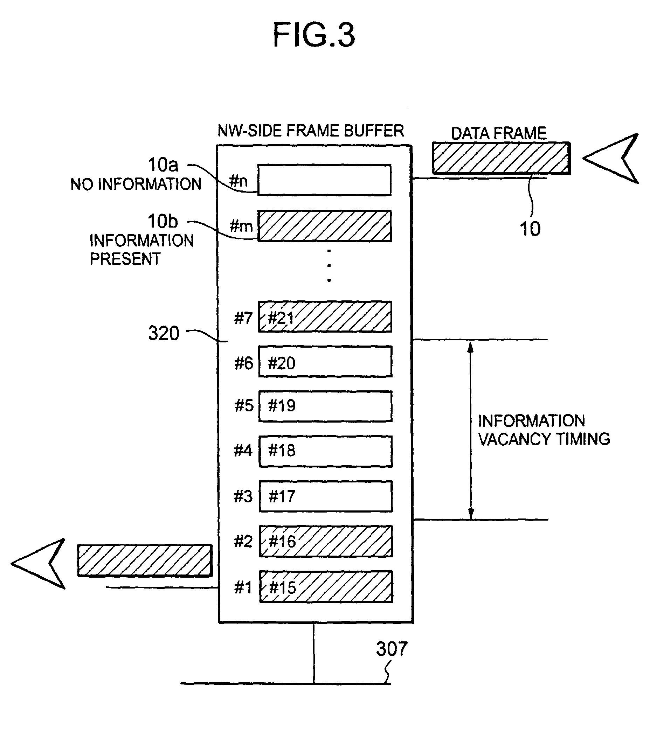

Fig. 3 shows a state of accumulation of frames in the frame buffer 320 adapted for a line on the side of NW.

The NW-side frame buffer 320 receives data frames one by one through the BSC - data communication network line 400. The accumulated data frame 10 are accumulated in turn from the frame buffer number #1 to the number #n A frame is sent from the frame buffer #1 to the switch 303, and, at the same time, the buffer number of each accumulated frame is changed by -1. A new frame received from the data communication network 1000 is accumulated at #n. With respect to each of the accumulated frames, it is judged if that frame contains information or not (when information is contained, it is judged as "information present", and otherwise, it is judged as "no information found"). After the judgment, one set of frame information is defined by a combination of a frame number specific to the judged frame, existence or nonexistence of information contained in that frame, and a frame buffer number at which that frame is accumulated. Then, n sets of frame information relating to all the frames in accumulation in the frame buffer 320 adapted for a line on the NW side are sent to the memory 306 through the control signal bus 307 whenever the accumulated frames in the frame buffer 320 are updated. The sent information is stored in the frame information control table 350.

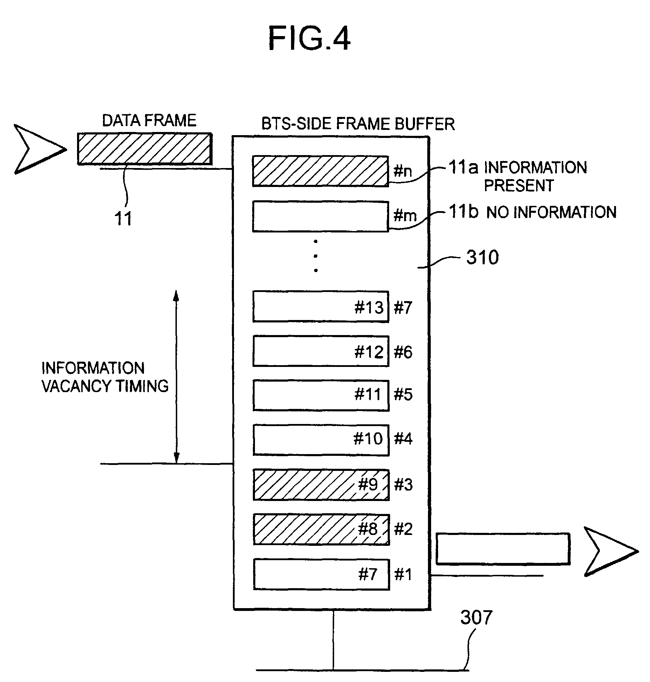

Fig. 4 shows a state of accumulation of frames in the frame buffer 310 adapted for a line on the side of BTS.

The BTS-side frame buffer 310 receives a data frame 11 one by one through the BTS - BSC line 250 and accumulates received frames in turn from the frame buffer number #1 to the number #n. The accumulated frame is sent from the frame buffer #1 to the switch 303, and, at the same time, the buffer number of each accumulated frame is changed by -1. A new frame received from the BTS is accumulated at #n. With respect to each of the accumulated frames, it is judged if that frame contains information or not (when information is contained, it is judged as "information present", and otherwise, it is judged as "no information found"). After the judgment, one set of frame information is defined by a combination of a frame number specific to the judged frame, existence or nonexistence of information contained in that frame, and a frame buffer number at which that frame is accumulated. Then, n sets of frame information relating to all the frames in accumulation in the frame buffer 310 adapted for a line on the BTS side are sent to the memory 306 through the control signal bus 307 whenever the accumulated frames in the frame buffer 310 are updated. The sent information is stored in the frame information control table 350.

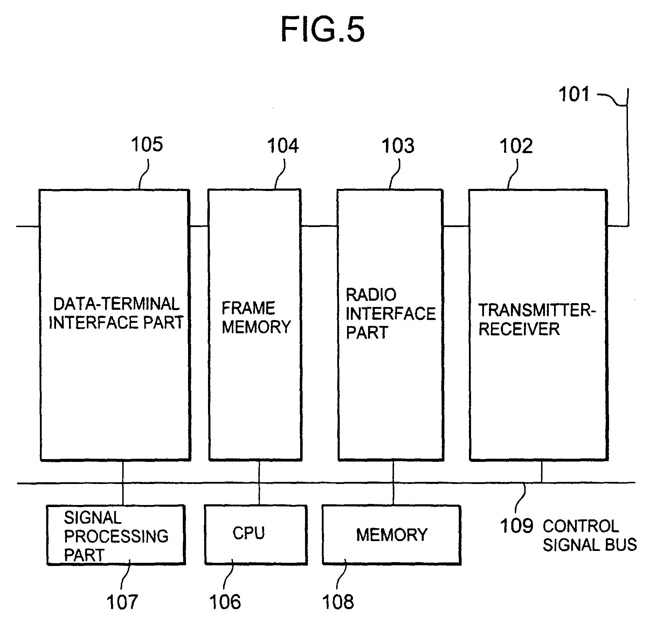

Fig. 5 shows an outline of the inner structure of the data MS 100.

The data MS 100 comprises: an antenna 101 and a transmitter-receiver 102 for performing radio transmission and reception to and from a BTS; a radio interface part 103 that accommodates the radio link 150; a data-terminal-side interface part 105 for realizing connection with a data terminal; a signal processing part 107 for analyzing and generating control signals on both BTS- and data-terminal-side interfaces; a CPU 106 for performing control processing for each element inside the data MS; a memory 108 for storing control information and a program for the above-mentioned control processing; a control signal bus 109 used for sending and receiving the above-mentioned control signals between the elements; and an MS frame memory 104 for temporarily storing data frames sent through the radio link 150.

A data frame 11 received by the data-terminal-side interface part 105 is sent to the MS frame memory 104. When that frame information is stored in the frame memory 104, that frame is sent to the radio interface part 103, and is sent to the BTS 200 through the transmitter-receiver 102 and the antenna 101. The MS frame memory 104 stores p (p: integer) frames at any time, and, when a new frame is received, contents of the oldest frame are erased to store the contents of the new frame. Further, when the signal control part 107 receives a signal indicating handoff, which includes handoff timing information, from the side of the BTS through the antenna 101, the transmitter-receiver 102, the radio interface part 103, and the control signal bus 109, then, based on the handoff timing information, the CPU 106 calculates the specific number of the frame that will passing the switch 303 just after the BSC switches lines, and instructs the MS frame memory 104 to perform retransmission from the frame having the same number as the above-mentioned specific number of the frame. By this instruction, the MS frame 104 starts retransmission from the frame having that frame number.

On the other hand, a data frame 10 sent from the BTS 200 is received through the antenna 101, the transmitter-receiver 102, and the radio interface part 103, and sent to the data terminal side through the data-terminal-side interface 105 without being stored in the frame memory 104.

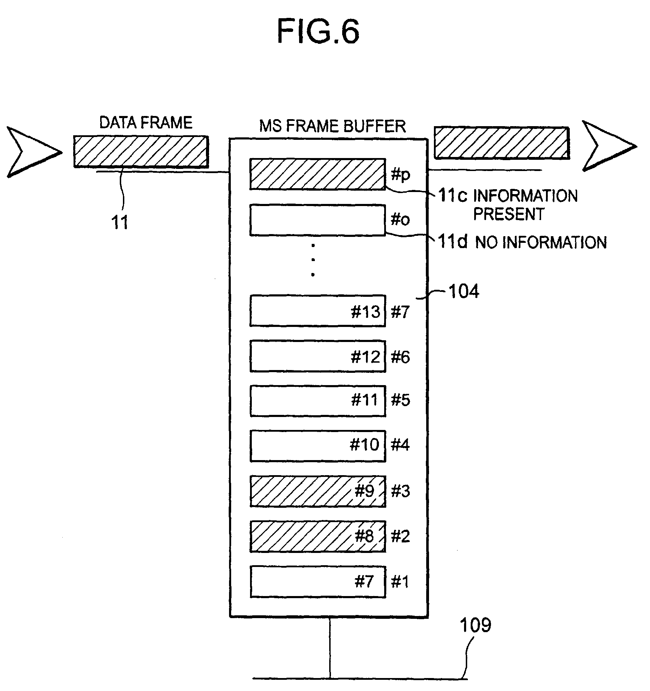

Fig. 6 shows a state of storage and accumulation of frames in the MS frame memory 104.

Data frames 11 received from the data terminal are stored into the frame buffer from frame buffer number #1 through #p in turn. Frames are sent to the switch 303 of the BSC 300 from the frame whose frame buffer number is indicated by the CPU 106, and the buffer number of the accumulated frames is changed by -1.

On the other hand, separately from the MS frame buffer, the data MS is provided with a reception buffer required for receiving frames from a BTS. This reception buffer has essentially no relation to the processing operation of the present invention, and therefore is not shown in the figure.

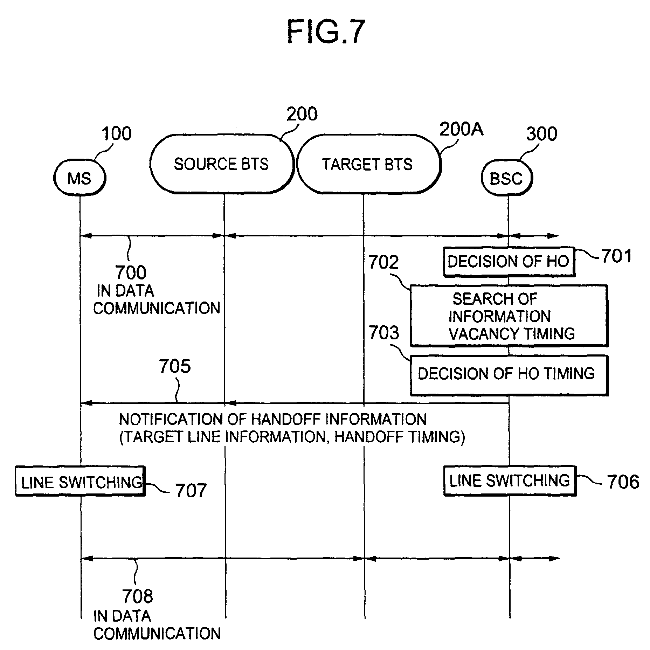

Fig. 7 shows an outline of a signal sequence between MS - BTS - BSC from a start to an end of handoff.

When the BSC 300 decides to perform handoff (HO) in the course of communication with the data network through the data MS 100 - source BTS 200 - BSC 300 (701), the BSC 300 starts to search the frame information control table 350 stored in the memory 306 within the BSC 300 for information vacancy timing that is longer than the time required for the handoff (702). When that timing is found, the timing is decided as handoff timing (703). Next, the BSC puts the decided handoff timing information (the first and last specific numbers of the frames in successive information vacancy frames) and the information on the BTS that is the target of the handoff (target line information) into a handoff information notification signal 705, and sends the signal to the data MS 100. On receiving that signal, the data MS 100 switches the lines by switching setting of the transmitter-receiver based on the handoff timing information, and by starting retransmission from the frame at the timing corresponding to the handoff timing of the MS frame memory (707). On the other hand, also the BSC 300 switches the lines at the handoff timing that it itself decided (706). After the end of the above operation, the data communication is restarted between the MS 100 - target BTS 200A - BSC 300 - data communication network 1000.

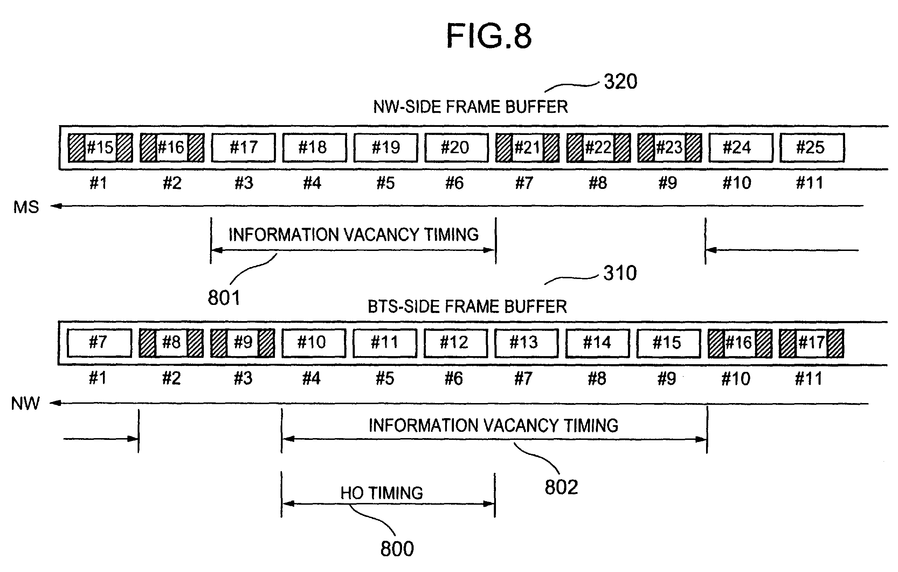

Fig. 8 shows relation between the handoff timing and the information vacancy timing.

With respect to frames accumulated in the frame buffer adapted for an NW-side line and in the frame buffer adapted for a BTS-side line, when the following conditions are satisfied:

(1) there are parts each consisting of successive frames containing no data (information vacancy timings).
(2) the information vacancy timings of both buffers overlap, and
(3) the overlap timing is longer than the time required for the handoff,

then, this overlap timing becomes "handoff timing".

In the case that the above-mentioned "handoff timing" does not exist, the following processing is carried out to generate a "handoff timing" forcibly.

(1) First, there will be described a case where both the frame buffer 320 adapted for an NW-side line and the frame buffer 310 adapted for a BTS-side line do not have a part successively containing no data. Received frames are transferred from the frame buffer 320 adapted for a line on the NW side and the frame buffer 310 adapted for a line on the BTS side to NW-side and BTS-side frame buffers (not shown) provided, in the BTS 300, separately from each other, to forcibly- generate parts each consisting of successive frames containing no data. At that time, the processing is performed such that both the NW and BTS sides have the same timing.
(2) Next, there will be described a case where the frame buffer 320 adapted for a line on the NW side has a part successively containing no data, while the frame buffer 310 adapted for a line on the BTS side does not have such a part.
     In this case, in conformity with the information vacancy timing that exists in the frame buffer 320 adapted for a line on the NW side, frames are transferred from the frame buffer 310 adapted for a line on the BTS side to the above-mentioned separately-provided frame buffer such that information vacancy timing is generated in the frame buffer 310 adapted for a line on the BTS side.
(3) Last, there will be described a case where the frame buffer 310 adapted for a line on the BTS side has a part successively containing no data, while the frame buffer 320 adapted for a line on the NW side does not have such a part.
     In this case, in conformity with the information vacancy timing that exists in the frame buffer 310 adapted for a line on the BTS side, frames are transferred from the frame buffer 320 adapted for a line on the NW side to the above-mentioned separately-provided frame buffer such that information vacancy timing is generated in the frame buffer 320 adapted for a line on the NW side.

The processing of the above cases (1) through (3) is carried out by the CPU 305 according to the program in the memory 306.

It goes without saying that, in any of the above cases (1) through (3), the forcibly-generated information timing or timings make the overlap timing longer than the time required for the handoff.

Further, in the cases of the above (1) and (2), in order to forcibly generate the information vacancy timing in the frame buffer 310 adapted for a line on the BTS side, the data MS or BTS may be controlled to inhibit transfer.

According to the above-described operation, handoff timing can be forcibly generated by the BSC 300.

Fig. 9 shows a state of information control in the frame information control table 350 inside the BSC 300.

In the table 350, when n sets of frame information (each consisting of a frame specific number, existence or nonexistence of information contained in the frame, and a frame buffer number at which the frame is accumulated) sent from the frame buffer 320 adapted for a line on the NW side and the frame buffer 310 adapted for a line on the BTS side are received, a frame buffer number is used as a key to search the same number in the "frame buffer number" 351 on the table 350. Then, into the corresponding "downlink frame specific number" 352 and "existence of downlink frame information" 353, are entered a frame specific number and existence or nonexistence of information contained in that frame, which are sent from the frame buffer adapted for a line on the NW side. And, into the "uplink frame specific number" 354 and "existence of uplink frame information" 355, are entered a frame specific number and existence or nonexistence of information contained in that frame, which are sent from the frame buffer adapted for a line on the BTS side. Next, the entry of the "existence of downlink frame information" and the entry of the "existence of uplink frame information" are compared for each line starting from the frame buffer number #n on the table 350. When both entries are "No", following values are set into the "switching frame information" 356: the switching frame information value (k-th line) = the switching frame information value (k+1-th line) + 1 ( k=n~1 ; the switching frame information value (n + 1) = 0), and otherwise, the switching frame information value (k-th line) = 0.

The above-described write operation of the frame information into the table 350 is carried out whenever one frame is received by both buffers 310 and 320.

When the processing operation of handoff is started and the handoff timing is searched, the "switching frame information" 350 of the table 350 is referred to. For example, in the case that the time required for handoff is more than three frames, a line whose value of the switching frame information is 3 or more is searched. Then, the handoff timing is decided as the period between the transmission and reception timing (successive vacancy frame transmission timing) of the frame showing the maximum value among the detected switching frame information values and the transmission and reception timing (successive vacancy frame transmission end timing) of the frame that appears as the first switching frame information value 1 under the above-mentioned line. The frame buffer number corresponding to the successive vacancy frame transmission timing and the frame buffer number corresponding to the successive vacancy frame transmission end timing are sent to the CPU 305. Based on that timing information, the CPU 305 calculates the actual time at which the switch 303 switches the lines. At that time, the switch 303 switches from the source line to the target line. On the other hand, the handoff timing decided above is transmitted to the data MS 100 by means of the signal processing part 304 through the source BTS 200. Based on that information, the data MS 100 decides frame retransmission timing and starts the retransmission.

Industrial Applicability

In a mobile communication network to which the present invention is applied, when handoff is started owing to movement of a data terminal in the course of communication, actual data missing does not occur although the data communication network is temporarily disconnected. Accordingly, it is possible to realize handoff that does not invite lowering of the data transfer rate. Further, since the actual data missing can be excluded without using the conventional soft handoff, and simultaneous use of a plurality of lines is not necessary, the number of admitted subscribers is expected to increase in comparison with the data communication network using the soft handoff. Further, in the case that the present invention is applied to packet data communication, traffic is not tightened since soft handoff is not used, and accordingly, lowering of the data transfer rate can be prevented.

**Claims**

1. A method of switching lines in a data MS (100), a plurality of base transceiver systems (200) accommodating said data MS through radio lines (150), a base station controller (300) accommodating said plurality of base transceiver systems, and a data communication network (1000) connected to said base station controller, wherein:

   when said data MS, in the course of transmitting discontinuous data through a before-movement base transceiver system, which is one of said plurality of base transceiver systems, in an area formed by said before-movement base transceiver, moves to an area formed by an after-movement base transceiver system different from said before-movement base transceiver system,
   said base station controller:
   detects a timing at which data transmission and reception are not performed with said before-movement base transceiver system; and
   switches, at said timing, from a line set through said before-movement base transceiver system to a line through said after-movement base transceiver system, which is required after movement.

2. The method of switching lines according to Claim 1, wherein:

   said timing at which data transmission and reception are not performed, which is detected by said base station controller, is communicated to said data MS.

3. A method of switching lines in a data MS (100), a plurality of base transceiver systems (200) accommodating said data MS through radio lines (150), a base station controller (300) accommodating said plurality of base transceiver systems, and a data communication network (1000) connected to said base station controller, wherein:

   when said data MS, in the course of transmitting discontinuous data through a before-movement base transceiver system, which is one of said plurality of base transceiver systems, in an area formed by said before-movement base transceiver, moves to an area formed by a after-movement base transceiver system different from said before-movement base transceiver system,
   said base station controller:
   detects, one by one, timings at which data from said data communication network is not received and timings at which data from said base transceiver system is not received;

obtains a timing at which data is not received both from said data communication network and said base transceiver system; and

switches, at said obtained timing, from a line set through said before-movement base transceiver system to a line through said after-movement base transceiver system, which is required after movement.

4. The method of switching lines according to Claim 3, wherein:

said timing at which data is not received both from said data communication network and from said base transceiver system, which is detected by said base station controller, is communicated to said data MS.

5. A method of switching lines in a data MS (100), a plurality of base transceiver systems (200) accommodating said data MS through radio lines (150), a base station controller (300) accommodating said plurality of base transceiver systems, and a data communication network (1000) connected to said base station controller, wherein:

when said data MS, in the course of transmitting discontinuous data through a before-movement base transceiver system, which is one of said plurality of base transceiver systems, in an area formed by said before-movement base transceiver, moves to an area formed by an after-movement base transceiver system different from said before-movement base transceiver system,
said base station controller:
receives downlink communication frames from said data communication network and judges if data is contained in said received frames to detect a timing at which data is not received,
receives uplink communication frames from said base transceiver system and judges if data is contained in said received frames to detect a timing at which data is not received;
obtains a timing at which data is not received both from said data communication network and from said base transceiver system; and
switches, at said obtained timing, from a line set through said before-movement base transceiver system to a line through said after-movement base transceiver system, which is required after movement.

6. The method of switching lines according to Claim 5, wherein:

said timing at which data is not received both from said data communication network and from said base transceiver system, which is detected by said base station controller, is communicated to said data MS.

7. The method of switching lines according to Claim 5, wherein:

said data MS:
stores, temporarily, a plurality of frames to be sent to said base transceiver system;
detects a frame corresponding to said communicated timing among said plurality of frames stored temporarily in the data MS; and
performs retransmission from said detected frame.

8. A method of switching lines in a data MS (100), a plurality of base transceiver systems (200) accommodating said data MS through radio lines (150), a base station controller (300) accommodating said plurality of base transceiver systems, and a data communication network (1000) connected to said base station controller, wherein:

when said data MS, in the course of transmitting discontinuous data through a before-movement base transceiver system, which is one of said plurality of base transceiver systems, in an area formed by said before-movement base transceiver, moves to an area formed by an after-movement base transceiver system different from said before-movement base transceiver system,
said base station controller:
receives downlink communication frames from said data communication network and accumulates said frames in an NW-side buffer in said base station controller;
judges if data is contained in each of all the frames accumulated in said NW-side buffer, to detect a timing at which data is not received for a certain period of time;
receives uplink communication frames from said base transceiver system and accumulates said frames in a base-transceiver-system-side buffer in said base station controller;
judges if data is contained in each of all the frames accumulated in said base-transceiver-system-side buffer, to detect a timing at which data is not received for a certain period of time;
obtains a timing at which data is not contained in both said uplink communication frames and said downlink communication frames for a certain period time; and
switches, at said obtained timing, from a line set through said before-movement base transceiver system to a line through said after-movement base transceiver system, which is required after movement.

9. The method of switching lines according to Claim 8, wherein:

with respect to each of the communication frames accumulated in each of said NW-side buffer and said base-transceiver-system-side buffer, a specific number of the frame and existence or nonexistence of information contained in said frame are stored into an information control table, being associated with a frame buffer number of the frame; and said table is used to detect a timing at which data is not contained in both said uplink communication frames and said downlink communication frames, for a certain period of time.

10. The method of switching lines according to Claim 9, wherein:

said timing at which data is not received, which is detected by said base station controller, is communicated to said data MS.

11. The method of switching lines according to Claim 10, wherein:

said data MS:
stores, temporarily, a plurality of frames to be sent to said base transceiver system;
detects a frame number corresponding to said communicated timing among said plurality of frames stored temporarily in the data MS, said detection being carried out based on contents of said table; and
performs retransmission from said detected frame.

12. The method of switching lines according to Claim 10, wherein:

said timing communication to said data MS is carried out by communicating the frame number corresponding to the timing at which data is not received both from said data communication network and from said base transceiver system, which is detected by said base station controller.

13. The method of switching lines according to Claim 12, wherein:

said data MS stores, temporarily, a plurality of frames to be sent to said base transceiver system and respective frame numbers of said plurality of frames;

said frame number corresponding to the timing at which data is not received both from said data communication network and from said base transceiver system, which is detected by said base station controller, is communicated to said data MS; and
said data MS detects a frame corresponding to said frame number, which is sent at said timing, among said plurality of frames temporarily stored in said data MS, and performs retransmission from said detected frame.

14. A base station controller in a data MS (100), a plurality of base transceiver systems (200) accommodating said data MS through radio lines (150), a base station controller (300) accommodating said plurality of base transceiver systems, and a data communication network (1000) connected to said base station controller, said base station controller comprising:

an NW-side interface part for receiving communication frames from said data communication network;
an NW-side buffer for accumulating frames received from said NW-side interface part:
a base-transceiver-system-side interface part for receiving communication frames from said base transceiver systems; and
a base-transceiver-system-side buffer for accumulating frames received from said base-transceiver-system-side interface part.

15. The base station controller according to Claim 14, further comprising:

a means for judging existence or nonexistence of data contained in each of the frames accumulated in said NW-side buffer and said base-transceiver-system-side buffer.

16. The base station controller according to Claim 15, further comprising:

a means for identifying a frame number of each of the frames accumulated in said NW-side buffer and said base-transceiver-system-side buffer; and
a means for storing a result of judgement on existence or nonexistence of data and a corresponding frame number, in association with each of the frames accumulated in the NW-side buffer and the base-transceiver-system-side buffer.

17. A base station controller in a data MS (100), a plurality of base transceiver systems (200) accommodating said data MS through radio lines (150), a base station controller (300) accommodating said plurality of base transceiver systems, and a data communication network (1000) connected to said base station controller, said base station controller comprising:

> an NW-side interface part for receiving communication frames from said data communication network;
> an NW-side buffer for accumulating frames received from said NW-side interface part;
> a base-transceiver-system-side interface part for receiving communication frames from said base transceiver systems;
> a base-transceiver-system-side buffer for accumulating frames received from said base-transceiver-system-side interface part;
> a means for judging existence or nonexistence of data contained in each of the frames accumulated in said NW-side buffer and said base-transceiver-system-side buffer;
> a means for identifying a frame number of each of the communication frames accumulated in said NW-side buffer and said base-transceiver-system-side buffer;
> a means for storing said identified frame number and said judged existence or nonexistence of data, in association with a frame buffer number of each of the frames stored in the NW-side buffer and the base-transceiver-system-side buffer;
> a means for extracting a timing at which data is not received both from said data communication network and from said base transceiver systems, said extraction being performed based on said association in said means for storing; and
> a means for extracting each frame number corresponding to said extracted timing.

18. The base station controller according to Claim 17, further comprising a means for sending said extracted each frame number to said data MS.

19. A data MS in a data MS (100), a plurality of base transceiver systems (200) accommodating said data MS through radio lines (150), a base station controller (300) accommodating said plurality of base transceiver systems, and a data communication network (1000) connected to said base station controller, said data MS comprising:

> a means for temporarily storing frames to be sent to said base station controller;
> a means for extracting a specific frame out of said plurality of stored frames, based on information on said specific frame indicated by said base station controller; and
a means for starting retransmission from said extracted frame.

20. The data MS according to Claim 19, wherein:

> said means for temporarily storing stores frames and frame numbers of said frames.

# FIG.1

DATA
COMMUNICATION
NETWORK ⁓1000

⁓400

⁓300

BSC

500⁓

⁓500A

BEFORE-HANDOFF DATA
TRANSMISSION-RECEPTION
PATH

250A⁓

AFTER-HANDOFF DATA
TRANSMISSION-RECEPTION PATH

⁓250

200⁓

200A⁓

BTS

BTS

⁓150

DATA MS

100⁓

# FIG.2

EP 1 098 540 A1

# FIG.3

NW-SIDE FRAME BUFFER                    DATA FRAME

10a
NO INFORMATION          #n

10b
INFORMATION             #m
PRESENT
                                                    10

                        #7    #21

320
                        #6    #20

                        #5    #19                   INFORMATION
                                                    VACANCY TIMING
                        #4    #18

                        #3    #17

                        #2    #16

                        #1    #15

                                        307

# FIG.4

DATA FRAME

BTS-SIDE FRAME BUFFER

11

11a INFORMATION PRESENT

11b NO INFORMATION

310

#n

#m

#13 #7

#12 #6

#11 #5

#10 #4

#9 #3

#8 #2

#7 #1

INFORMATION VACANCY TIMING

307

# FIG.5

# FIG.6

DATA FRAME       MS FRAME BUFFER

11

11c INFORMATION PRESENT

11d NO INFORMATION

#p

#o

104

#13 #7

#12 #6

#11 #5

#10 #4

#9 #3

#8 #2

#7 #1

109

# FIG.7

SOURCE BTS 200

TARGET BTS 200A

MS 100

BSC 300

700
IN DATA
COMMUNICATION

702

DECISION OF HO ∽701

SEARCH OF
INFORMATION
VACANCY TIMING

703

DECISION OF HO TIMING

705

NOTIFICATION OF HANDOFF INFORMATION
(TARGET LINE INFORMATION, HANDOFF TIMING)

LINE SWITCHING ∽ 707

LINE SWITCHING ∽ 706

708
IN DATA
COMMUNICATION

# FIG.8

NW-SIDE FRAME BUFFER — 320

| #15 | #16 | #17 | #18 | #19 | #20 | #21 | #22 | #23 | #24 | #25 |
|---|---|---|---|---|---|---|---|---|---|---|
| #1 | #2 | #3 | #4 | #5 | #6 | #7 | #8 | #9 | #10 | #11 |

MS

INFORMATION VACANCY TIMING

801

BTS-SIDE FRAME BUFFER — 310

| #7 | #8 | #9 | #10 | #11 | #12 | #13 | #14 | #15 | #16 | #17 |
|---|---|---|---|---|---|---|---|---|---|---|
| #1 | #2 | #3 | #4 | #5 | #6 | #7 | #8 | #9 | #10 | #11 |

NW

INFORMATION VACANCY TIMING

802

HO TIMING

800

EP 1 098 540 A1

# FIG.9

FRAME INFORMATION ⌐350
CONTROL TABLE

| FRAME BUFFER NUMBER | DOWNLINK FRAME | | UPLINK FRAME | | SWITCHING FRAME INFORMATION |
|---|---|---|---|---|---|
| | SPECIFIC NUMBER | EXISTENCE OF INFORMATION | SPECIFIC NUMBER | EXISTENCE OF INFORMATION | |
| #1 | #15 | YES | #7 | YES | 0 |
| #2 | #16 | YES | #8 | YES | 0 |
| #3 | #17 | NO | #9 | YES | 0 |
| #4 | #18 | NO | #10 | NO | 3 |
| #5 | #19 | NO | #11 | NO | 2 |
| #6 | #20 | NO | #12 | NO | 1 |
| #7 | #21 | YES | #13 | NO | 0 |
| ⋮ | ⋮ | ⋮ | ⋮ | ⋮ | ⋮ |
| #n | #m | NO | #k | NO | 1 |

351  352  353 354  355  356

# INTERNATIONAL SEARCH REPORT

| International application No. |
|---|
| PCT/JP98/03178 |

**A. CLASSIFICATION OF SUBJECT MATTER**
Int.Cl⁶ H04Q7/22, 7/28, 7/36

According to International Patent Classification (IPC) or to both national classification and IPC

**B. FIELDS SEARCHED**

Minimum documentation searched (classification system followed by classification symbols)
Int.Cl⁶ H04B7/26, H04Q7/20-7/38

Documentation searched other than minimum documentation to the extent that such documents are included in the fields searched

| | | | |
|---|---|---|---|
| Jitsuyo Shinan Koho | 1926-1997 | Jitsuyo Shinan Toroku Koho | 1996-1998 |
| Kokai Jitsuyo Shinan Koho | 1971-1997 | | |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, A, 08-289118 (Fuji Xerox Co., Ltd.), 1 November, 1996 (01. 11. 96), Column 5, lines 2 to 50 (Family: none) | 1 |
| X | JP, A, 10-136426 (K.K. YRP Ido Tsushin Kiban Gijutsu Kenkyusho), 22 May, 1998 (22. 05. 98), Fig. 2 ; column 3, line 48 to column 4, line 25 (Family: none) | 14 |
| X | JP, A, 10-164642 (Fujitsu Ltd.), 19 June, 1998 (19. 06. 98), Figs. 2, 3 (Family: none) | 14 |
| Y | JP, A, 09-331580 (Toshiba Corp.), 22 December, 1997 (22. 12. 97), Column 14, lines 32 to 37 (Family: none) | 19 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 October, 1998 (12. 10. 98) | 27 October, 1998 (27. 10. 98) |

| Name and mailing address of the ISA/ Japanese Patent Office | Authorized officer |
|---|---|
| Facsimile No. | Telephone No. |

Form PCT/ISA/210 (second sheet) (July 1992)